# EUROPÄISCHE PATENTANMELDUNG

(11) **EP 1 544 536 A2**
(43) Veröffentlichungstag der Anmeldung: **22.06.2005**
(21) Anmeldenummer: 04029051.2
(22) Anmeldetag: 08.12.2004
(51) Int. Cl.: F21S 8/12, F21V 11/16, B60Q 1/04

(54) **Scheinwerfer für Fahzeuge**

(30) Priorität: 17.12.2003 DE 10359183
(71) Anmelder: Hella KGaA Hueck & Co., 59552 Lippstadt (DE)
(72) Erfinder: Burg, Michael, 59557 Lippstadt (DE); Herbers, Thomas, 59555 Lippstadt (DE); Kurkofka, Waldemar, 33378 Rheda-Wiedenbrück (DE)

(57) **Zusammenfassung**

Die Erfindung betrifft einen Scheinwerfer für Fahrzeuge mit einem Projektionsmodul (1), das einen Reflektor (2), eine Linse (3) und ein dem Reflektor (2) zugeordnetes Leuchtmittel (5) aufweist. Oberhalb des Projektionsmoduls (1) ist ein lichtdurchlässiges Designelement (7) angeordnet, welches durch Lichtstrahlen (8) des Leuchtmittels (5) ausleuchtbar ist. Zwischen dem vorderen oberen Rand des Reflektors (2) und der Linse (3) ist eine Lichtabschirmeinrichtung (10) angeordnet, die zur Schwächung der Lichtintensität des unteren Bereichs des aus dem Scheinwerfer austretenden Lichtbündels dient und mindestens einen ersten Umlenkspiegel (11) aufweist. Der Umlenkspiegel (11) lenkt von dem Reflektor (2) reflektierte Lichtstrahlen (8) nach oben ab, die zur Ausleuchtung des lichtdurchlässigen Designelements (7) dienen.

## Beschreibung

Die Erfindung betrifft einen Scheinwerfer für Fahrzeuge mit einem Projektionsmodul, das einen Reflektor, eine Linse und ein dem Reflektor zugeordnetes Leuchtmittel aufweist, und mit einem oberhalb des Projektionsmoduls angeordneten lichtdurchlässigen Designelement, welches durch Lichtstrahlen des Leuchtmittels ausleuchtbar ist.

Ein Scheinwerfer für Fahrzeuge dieser Art ist aus der DE - A - 102 06 925 bekannt. Das Projektionsmodul ist von einem zur Abdeckung und Halterung dienenden Designelement umgeben, das zumindest in dem von außen sichtbaren oberen Bereich aus transluzenten Material besteht. Eine transparente Fläche des Designelements dient zur Einkopplung von Lichtstrahlen des Leuchtmittels, die von der Außenfläche des Designelements diffus abgestrahlt werden. Zur Ausleuchtung des Designelements werden direkt aus der Lichtquelle austretenden Lichtstrahlen genutzt. Um das Designelement ausreichend hell auszuleuchten ist eine große Durchtrittsöffnung für die Lichtstrahlen notwendig.

Ein aus der DE 43 01 936 A1 bekannter Scheinwerfer weist einen elliptischen Reflektor mit einem inneren und äußeren Brennbereich auf. Zwischen dem Reflektor und einer Linse sind eine erste und zweite Blende einer Lichtabschirmeinrichtung angeordnet. Die erste Blende ist unterhalb der optischen Achse des Reflektors angeordnet, während die zweite Blende in einem Abstand oberhalb der ersten Blende angeordnet ist. Somit besteht zwischen der ersten und zweiten Blende ein Spalt, der durch Brennlinien der ersten und zweiten Blende begrenzt ist. Die erste Blende bildet mit ihrer Brennlinie eine Hell-Dunkel-Grenze ab, welche ein Lichtbündel des Scheinwerfers nach oben hin begrenzt, während die zweite Blende eine Hell-Dunkel-Grenze abbildet, die das Lichtbündel nach unten hin begrenzt. Durch die obere Hell-Dunkel-Grenze ist das Licht für die Ferne und durch die untere Hell-Dunkel-Grenze das Licht nahe vor dem Fahrzeug bestimmt. Die von der zweiten Blende abgeschirmten Lichtstrahlen bleiben ungenutzt.

Aus der DE - A - 199 61 858 ist ein Scheinwerfer für Fahrzeuge bekannt, der ein topfförmiges Gehäuse und eine die vordere Öffnung des Gehäuses abdeckende Lichtscheibe aufweist, die frei von Optik ist. Im Inneren des Gehäuses sind zwei Lichtmodule für Abblendlicht und Fernlicht und eine Leuchte für Blinklicht angeordnet. Das Lichtmodul für Abblendlicht ist von einem Projektionsmodul gebildet. Die Lichtmodule und die Leuchte sind von einer Abdeckblende umgeben, die sich bis zum vorderen umlaufende Rand des Gehäuses erstreckt. Die Abdeckende ist auf ihrer Vorderseite mit einer silberfarbigen reflektierenden Oberflächenschicht und benachbart zur Leuchte mit einem Designelement versehen, das von einer farblich gestaltbaren lichtundurchlässigen Abdeckung gebildet ist.

Aufgabe der Erfindung ist es, den im Oberbegriff des Anspruchs 1 beschriebenen Scheinwerfer für Fahrzeuge derart zu verbessern, dass das lichtdurchlässige Designelement auch dann ausreichend hell ausleuchtbar ist, wenn das Projektionsmodul eine Einrichtung zur Abschirmung von Lichtstrahlen aufweist, welche im unteren Bereich eines Lichtbündels des Scheinwerfers verlaufen und zur Ausleuchtung des sehr nah zum Fahrzeug liegen Vorfeldes dienen können. Diese Aufgabe wird nach der Erfindung dadurch gelöst, dass zwischen dem vorderen oberen Rand des Reflektors und der Linse eine Lichtabschirmeinrichtung angeordnet ist, die zur Schwächung der Lichtintensität des unteren Bereichs des aus dem Scheinwerfer austretenden Lichtbündels dient und mindestens einen ersten Umlenkspiegel aufweist, welcher von dem Reflektor reflektierte Lichtstrahlen nach oben zum lichtdurchlässigen Designelement hin ablenkt. Dadurch dienen die von der Lichtabschirmeinrichtung abgeschirmten und für die Fahrbahnausleuchtung nicht genutzten Lichtstrahlen zur Ausleuchtung der Designelements.

Weiterhin ist es vorteilhaft, wenn oberhalb des ersten Umlenkspiegels und außerhalb des Projektionsmoduls mindestens ein zweiter Umlenkspiegel angeordnet ist, der die Lichtstrahlen zur Rückseite des Scheinwerfers hin umlenkt. Dadurch ist auch ein oberhalb des Reflektors angeordnetes lichtdurchlässiges Designelement ausleuchtbar.

Die Sammlung von möglichst viel Restlicht zur sehr hellen Ausleuchtung des Designelement besteht, wenn zwei erste und zwei zweite Umlenkspiegel vorgesehen sind, wobei die ersten Umlenkspiegel mit ihrer Reflexionsfläche zum Reflektor hin und zur jeweils benachbarten Außenseite des Projektionsmoduls hin gekippt verlaufen. Die ersten Umlenkspiegel leiten die gesammelten Lichtstrahlen gerichtet zu den zweiten Umlenkspiegeln weiter. Weiterhin ist eine platzsparende Anordnung der Umlenkspiegel möglich. Die ersten und/oder zweiten Umlenkspiegel können spiegelsymmetrisch zu einer vertikalen Mittelebene verlaufen, in der die optische Achse des Reflektors verläuft.

Das lichtdurchlässige Designelements ist homogen beleuchtbar, wenn die zweiten Umlenkspiegel mit einer Streuoptik versehen sind und das lichtdurchlässige Designelement an der dem Projektionsmodul zugewandten Seite mit optischen Mitteln besetzt ist. Durch die Streuung der Lichtstrahlen kann weiterhin erreicht werden, dass bei einem Schwenken des Projektionsmoduls gegenüber einem feststehenden Designelement das Designelement in jeder Stellung des Projektionsmoduls gleichmäßig ausgeleuchtet ist.

In diesem Zusammenhang ist es weiterhin vorteilhaft, wenn das lichtdurchlässige Designelement an der dem Projektionsmodul zugewandten Seite mit optischen Mitteln besetzt ist. Die optischen Mittel dienen zum Sammeln der von dem Umlenkspiegel zur Verfügung gestellten Lichtmenge und koppelt das Licht in das aus transparentem Material hergestellte Designelement ein, so dass eine Reflexion der Lichtstrahlen an dem Designelement nicht oder nur gering zum Tragen kommt. Sie verbessert auch die homogene Ausleuchtung des Desig nelements.

Ein Einblick in das Scheinwerferinnere wird verhindert, wenn das lichtdurchlässige Designelement auf der Außenseite eine aufgeraute Oberfläche aufweist und/oder die Oberfläche auf der Außenseite des lichtdurchlässigen Designelements entsprechend einer benachbarten Oberfläche des Scheinwerfers strukturiert ist.

Weiterhin ist es vorteilhaft, wenn die Lichtabschirmeinrichtung einen nach unten gerichteten freistehenden Randabschnitt mit einem Lichtabschirmrand aufweist. Dadurch ist eine definierte Abschattung des Abblendlichts unmittelbar möglich. Die Abschattung erfolgt aus stilistischen Gründen und zur Minimierung der Blendung durch Abschatten von Restlicht, welches vom oberen Reflektorbereich reflektiert wird.

Besonders vorteilhaft ist es, wenn die Lichtabschirmeinrichtung mit den Umlenkspiegeln eine an dem vorderen Rand des Reflektors befestigte Einheit ist und mit den Umlenkspiegeln einteilig aus Metall oder Kunststoff hergestellt ist. Dadurch minimieren sich die Toleranzen der Umlenkspiegel zueinander und eine Lichtmengenerhöhung zur Ausleuchtung des Designelements ist möglich. Durch entsprechende Werkstoffauswahl ist auch bei größeren Temperaturschwankungen die Einheit ausreichend Form- und Verzugsstabil.

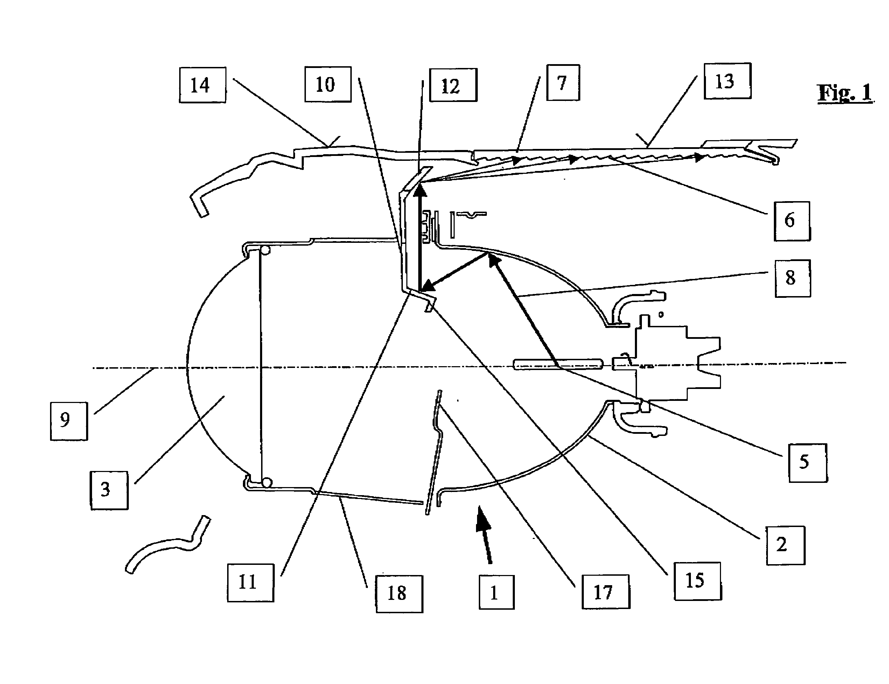

Ein Ausführungsbeispiel nach der Erfindung ist in der Zeichnung dargestellt und zwar zeigen
Figur 1 einen vertikalen mittleren Längsschnitt durch ein Projektionsmodul eines Scheinwerfers für Fahrzeuge mit einem oberhalb des Projektionsmoduls angeordneten ausleuchtbaren Designelement und

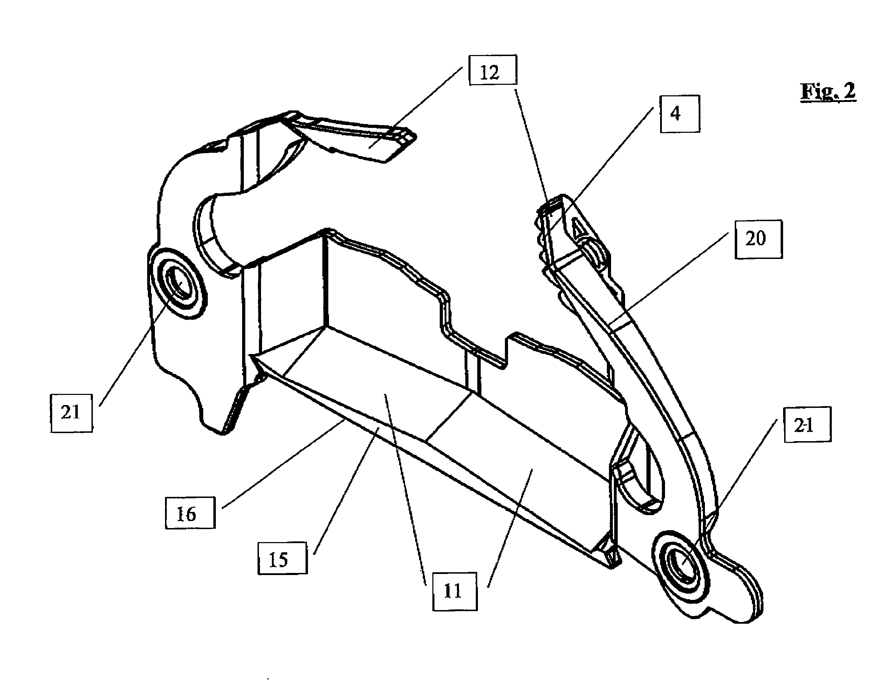

Figur 2 in einer perspektivischen Ansicht eine Lichtabschirmeinrichtung des Projektionsmoduls mit Umlenkspiegeln, die zur Ausleuchtung des Designelements dienen.

Der Scheinwerfer weist ein topfförmiges Gehäuse auf, dessen vordere Öffnung durch eine zumindest teilweise klare lichtdurchlässige Abschlussscheibe abgedeckt ist (nicht dargestellt). Im Inneren des Gehäuses ist mindestens ein schwenkbares Projektionsmodul 1 angeordnet. In der Regel ist im Scheinwerferinneren mindestens noch ein weiteres Lichtmodul angeordnet.

Das Projektionsmodul 1 besteht aus einem elliptischen Reflektor 2, einer Linse 3, einer zwischen Linse 3 und Reflektor 2 angeordneten Blende 17 und einer Lichtabschirmeinrichtung 10 und einem in einer Scheitelöffnung des Reflektors 2 gehalterten Leuchtmittel 5. Die Blende 17 ist unterhalb der optischen Achse 9 des Projektionsmoduls 1 angeordnet und erzeugt die obere Hell - Dunkel - Grenze eines abgeblendeten Lichtbündels. Die Lichtabschirmeinrichtung 10 ist oberhalb der optischen Achse 9 angeordnet und weist einen unteren Randabschnitt 15 mit einem Lichtabschirmrand 16 auf, der einen unteren Bereich des abgeblendeten Lichtbündels definiert abschattet. Als Leuchtmittel 5 kann eine Halogenlampe oder Xenonlampe dienen. Die Linse 3 ist von einem Linsenhalter 18 getragen, der über nicht dargestellte Tragbeine mit dem vorderen Rand des Reflektors 2 verbunden ist. Zwischen den Tragbeinen verbleibt im oberen Bereich des Linsenhalters 18 ein nach außen offener Bereich 11, durch den die am vorderen Rand des Reflektors 2 befestigte Lichtabschirmeinrichtung 10 hindurchführt. Die Lichtabschirmeinrichtung 10 weist zwei erste Umlenkspiegel 11 auf, die im Inneren des Projektionsmoduls 1 angeordnet sind und dem oberen vorderen Reflexionsbereich des Reflektors zugewandt sind. Die ersten Umlenkspiegel 11 sind symmetrisch zu einer vertikalen Mittelebene, in der die optische Achse 9 verläuft, angeordnet und mit einer Reflexionsschicht versehen. Die Lichtabschirmeinrichtung weist zwei nach oben ragende und außerhalb des Projektionsmoduls angeordnet Arme 20 auf, deren frei Endabschnitte jeweils einen zweiten Umlenkspiegel 12 aufweisen, die mit einer Streuoptik 4 versehen sind. Auf die ersten Umlenkspiegel 11 sammeln Lichtstrahlen 8, die von einem vorderen oberen Reflexionsbereich des Reflektors 2 reflektiert werden. Nach einer Reflexion der Lichtstrahlen 8 an den ersten Umlenkspiegeln 11 sind diese nach oben gerichtet und die zweiten Umlenkspiegel lenken die Lichtstrahlen gestreut nach hinten hin ab. Die Lichtstrahlen 8 hellen ein Designelement 7 auf, das aus transluzenten Material besteht, oberhalb des Reflektors 2 angeordnet ist und in einer Öffnung eines ortsfesten lichtundurchlässigen Abdeckelements 19 gehalten ist Das Abdeckelement 19 weist eine Lichtdurchtrittsöffnung für das Projektionsmodul 1 auf und schirmt eine Sicht in das Innere des Scheinwerfers ab. Das Designelement 7 weist auf der dem Projektionsmodul 1 zugewandten Seite optische Mittel 6 aufweist, die die Lichtstrahlen 8 sammeln und zur homogenen Ausleuchtung des Designelements 7 dienen. Auf der Außenseite weist das Designelement 7 eine des Außenseite des Designelements 7 entsprechend strukturierte Oberfläche 13 auf. Die Lichtabschirmeinrichtung 10 mit den Umlenkspiegeln 11 und 12 ist einteilig aus Metall oder Kunststoff hergestellt, wobei der Reflexionsgrad der Umlenkspiegel 11 und 12 durch metallisieren der optimiert ist. Die Lichtabschirmeinrichtung 10 weist radial nach außen abstehende Befestigungsabschnitte 21 auf, die an dem vorderen Rand des Reflektors 2 anliegen und an diesem befestigt ist.

### Bezugszeichenliste:

- 1.: Projektionsmodul
- 2.: Reflektor
- 3.: Linse
- 4.: Streuoptik
- 5.: Leuchtmittel
- 6.: optische Mittel
- 7.: Designelement
- 8.: Lichtstrahl
- 9.: optische Achse
- 10.: Lichtabschirmeinrichtung
- 11.: erste Umlenkspiegel
- 12.: zweite Umlenkspiegel
- 13.: Oberfläche
- 14.: Oberfläche
- 15.: Randabschnitt
- 16.: Lichtabschirmrand
- 17.: Blende
- 18.: Linsenhalter
- 19.: Abdeckelement
- 20.: Arme
- 21.: Befestigungsabschnitte

## Patentansprüche

1. Scheinwerfer für Fahrzeuge mit einem Projektionsmodul (1), das einen Reflektor (2), eine Linse (3) und ein dem Reflektor (2) zugeordnetes Leuchtmittel (5) aufweist, und mit einem oberhalb des Projektionsmoduls (1) angeordneten lichtdurchlässigen Designelement (7), welches durch Lichtstrahlen (8) des Leuchtmittels (5) ausleuchtbar ist, **dadurch gekennzeichnet, dass** zwischen dem vorderen oberen Rand des Reflektors (2) und der Linse (3) eine Lichtabschirmeinrichtung (10) angeordnet ist, die zur Schwächung der Lichtintensität des unteren Bereichs des aus dem Scheinwerfer austretenden Lichtbündels dient und mindestens einen ersten Umlenkspiegel (11) aufweist, welcher von dem Reflektor (2) reflektierte Lichtstrahlen (8) nach oben zum lichtdurchlässigen Designelement (7) hin ablenkt.

2. Scheinwerfer nach Anspruch 1, **dadurch gekennzeichnet, dass** oberhalb des ersten Umlenkspiegels (11) und außerhalb des Projektionsmoduls (1) mindestens ein zweiter Umlenkspiegel (12) angeordnet ist, der die Lichtstrahlen (8) zur Rückseite des Scheinwerfers hin umlenkt.

3. Scheinwerfer nach Anspruch 1 oder 2, **dadurch gekennzeichnet, dass** zwei erste und zwei zweite Umlenkspiegel (11 und 12) vorgesehen sind.

4. Scheinwerfer nach Anspruch 3, **dadurch gekennzeichnet, dass** die ersten Umlenkspiegel (11) mit ihrer Reflexionsfläche zum Reflektor (2) hin und zur jeweils benachbarten Außenseite des Projektionsmoduls (1) hin gekippt verlaufen.

5. Scheinwerfer nach einem der Ansprüche 2 bis 4, **dadurch gekennzeichnet, dass** die zweiten Umlenkspiegel (12) mit einer Streuoptik (4) versehen sind.

6. Scheinwerfer nach einem der Ansprüche 1 bis 5, **dadurch gekennzeichnet, dass** das lichtdurchlässige Designelement (7) an der dem Projektionsmodul (1) zugewandten Seite mit Lichtstrahlen (8) sammelnden optischen Mitteln (6) besetzt ist.

7. Scheinwerfer nach einem der Ansprüche 1 bis 6, **dadurch gekennzeichnet, dass** das lichtdurchlässige Designelement (7) auf der Außenseite eine aufgeraute Oberfläche (13) aufweist.

8. Scheinwerfer nach einem der Ansprüche 1 bis 7, **dadurch gekennzeichnet, dass** die Oberfläche (13) auf der Außenseite des lichtdurchlässigen Designelements (7) entsprechend einer benachbarten Oberfläche (14) des Scheinwerfers strukturiert ist.

9. Scheinwerfer nach einem der Ansprüche 1 bis 8, **dadurch gekennzeichnet, dass** die Lichtabschirmeinrichtung (10) einen nach unten gerichteten freistehenden Randabschnitt (15) mit einem Lichtabschirmrand (16) aufweist.

10. Scheinwerfer nach einem der Ansprüche 1 bis 9, **dadurch gekennzeichnet, dass** die Lichtabschirmeinrichtung (10) mit den Umlenkspiegeln (11 und 12) eine an dem vorderen Rand des Reflektors (2) befestigte Einheit ist.

11. Scheinwerfer nach Anspruch 10, die Lichtabschirmeinrichtung (10) mit dem mindestens einen Umlenkspiegel (11) einteilig aus Metall oder Kunststoff hergestellt ist.
